# EUROPEAN PATENT SPECIFICATION

(11) **EP 2 976 910 B1**
(45) Date of publication and mention of the grant of the patent: **20.01.2021**
(21) Application number: 14711226.2
(22) Date of filing: 17.03.2014
(51) Int. Cl.: H04W 36/00, H04W 12/10

(54) **SECURITY MODE CONTROL OF THE RRC PROTOCOL IN CASE OF MULTI-RAB SR-VCC OR MDT INTER-RAT HANDOVERS TO UTRAN**
SICHERHEITSMODUSSTEUERUNG DES RRC-PROTOKOLLS IM FALLE VON MULTI-RAB SR-VCC- ODER MDT-INTER-RAT-ÜBERGABEN AN UTRAN
CONTRÔLE DE MODE DE SÉCURITÉ DU PROTOCOLE RRC DANS LE CAS DE TRANSFERTS INTERCELLULAIRES INTER-RAT DE SR-VCC OU DE MDT MULTI-RAB À UN RÉSEAU UTRAN

(30) Priority: 18.03.2013 US 201313846054
(43) Date of publication of application: 27.01.2016
(73) Proprietor: Nokia Solutions and Networks Oy, 02610 Espoo (FI)
(72) Inventor: TIWARI, Bindhya Vashini, 01600 Vantaa (FI); CHANDRAMOULI, Devaki, Plano, Texas 75074 (US); HWANG, Woonhee, 02180 Espoo (FI); HORN, Guenther, 80331 Munich (DE); WONG, Curt, Sammamish, Washington 98075 (US); SIREN, Paula Hannele, 01300 Vantaa (FI)
(74) Representative: Style, Kelda Camilla Karen
(86) International application number: PCT/EP2014/055294
(87) International publication number: WO 2014/147019

(56) References cited:
- EP-A1- 2 134 121
- "3rd Generation Partnership Project; Technical Specification Group Core Network and Terminals; Mobile radio interface Layer 3 specification; Core network protocols; Stage 3 (Release 12)", 3GPP STANDARD; 3GPP TS 24.008, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. CT WG1, no. V12.1.0, 12 March 2013 (2013-03-12), pages 1-679, XP050692081, [retrieved on 2013-03-12]
- "3rd Generation Partnership Project; Technical Specification Group Radio Access Network; Radio Resource Control (RRC); Protocol specification (Release 10)", 3GPP STANDARD; 3GPP TS 25.331, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. V10.10.0, 2 January 2013 (2013-01-02), pages 1-1899, XP050691620, [retrieved on 2013-01-02]
- NOKIA SIEMENS NETWORKS: "SR-VCC to UMTS with multi-RAB case", 3GPP DRAFT; R2-131136 (SRVCC IP), 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Chicago, USA; 20130415 - 20130419 5 April 2013 (2013-04-05), XP050699263, Retrieved from the Internet: URL:http://www.3gpp.org/ftp/tsg_ran/WG2_RL 2/TSGR2_81bis/Docs/ [retrieved on 2013-04-05]
- NOKIA SIEMENS NETWORKS: "Clarification of the security configuration after MultiRAB inter-RAT Handover", 3GPP DRAFT; 25 331_XXXX_(REL-11)_R2-131137 (CLARIFICATION OF SECURITY CONFIG AFTER MULTIRAB ISHO), 3RD GENERATION PARTNERSHIP PROJECT (3GPP), MOBILE COMPETENCE CENTRE ; 650, ROUTE DES LUCIOLES ; F-069 , vol. RAN WG2, no. Chicago, USA; 20130415 - 20130419 5 April 2013 (2013-04-05), XP050699141, Retrieved from the Internet: URL:http://www.3gpp.org/ftp/tsg_ran/WG2_RL 2/TSGR2_81bis/Docs/ [retrieved on 2013-04-05]
- Dan Fox: "Testing of Layer 3" In: "Testing UMTS", 28 March 2008 (2008-03-28), John Wiley & Sons, Ltd, Chichester, UK, XP055125352, ISBN: 978-0-47-072442-2 pages 147-177, DOI: 10.1002/9780470987773.ch10, figure 10.3

## Description

### TECHNICAL FIELD

This invention relates generally to wireless networks and, more specifically, relates to handover from one radio access technology to another radio access technology.

### BACKGROUND

This section is intended to provide a background or context to the invention disclosed below. The description herein may include concepts that could be pursued, but are not necessarily ones that have been previously conceived, implemented or described.

Therefore, unless otherwise explicitly indicated herein, what is described in this section is not prior art to the description in this application and is not admitted to be prior art by inclusion in this section. Abbreviations that may be found in the specification and/or the drawing figures are defined below, prior to the claims.

Many mobile communications networks support circuit switched (CS) and packet switched (PS) data. Circuit switched data is typically voice data and allows a UE (e.g., a mobile telephone) to connect to another UE over a public switched telephone network (PSTN). Packet switched data, by contrast, may contain voice (e.g., via VoIP) and many other types of data such as video. Data is packaged used packets and is transmitted using IP techniques.

3 GPP TS 23.216 introduced Single Radio Voice Call Continuity (SRVCC), a feature which enables an IMS voice user (using packet switched data) in LTE to be transferred to 3G/2G via an inter-RAT handover, when there is no LTE coverage from IMS/IP to a standard CS domain in 3G/2G. Thus, a user seamlessly transfers from LTE to a 3G/2G network, where VoIP would not be supported, without the call being dropped. SRVCC can be performed from UTRAN to UTRAN/GERAN in addition to being performed from E-UTRAN to UTRAN/GERAN. When a user having a PS application running in E-UTRAN along with IMS Voice is transferred to UTRAN, IMS voice is switched to a legacy CS domain voice call by using the SRVCC procedure and PS service is transferred as such.

Although there are benefits to these types of inter-RAT handovers, there are also elements that could be improved. In particular because 3GPP TS 24.008, section 4.1.1.1.1 states, "the CS and PS domains in the network and MM and GMM layers in the UE, are not aware of whether integrity protection has been started in the lower layers by the other domain. It is mandatory for the network to initiate one security mode procedure for the CS domain and one for the PS domain." However, integrity protection is only for SRBs and hence integrity protection is common to both CS and PS by using the keys associated with the latest configured CN domain. Nonetheless, this scenario does not allow the UE to handle this message unless the PS domain has integrity protection started.

### SUMMARY

This section is intended to provide exemplary overviews and is not meant to be limiting.

A first exemplary method is disclosed which is performed by a user equipment having a mobility management layer for circuit switched domain and a general packet radio service mobility management layer for packet switched domain, whereby the mobility management layer for circuit switched domain and the general packet radio service mobility management layer for packet switched domain are responsible for supervision that integrity protection has been activated in lower layers and neither receive nor send layer 3 signaling messages unless integrity protection has been activated for the respective domain, whereby the lower layers of each of the circuit switched domain and packet switched domain provide the mobility management layer or the general packet radio service mobility management layer respectively with an indication when a security mode control procedure for the circuit switched domain or packet switched domain has been processed successfully, whereby upon reception of a first security mode command from universal terrestrial radio access network after single radio voice call continuity handover with packet switched and circuit switched radio access bearers to universal terrestrial radio access network, the user equipment activates the security mode control procedure only for the circuit switched domain; and the user equipment provides, if not all core network domain identity information elements in handover to universal terrestrial radio access network a command message indicate the same core network domain and upon successful completion of the security control procedure for the circuit switched domain, to the mobility management layer for the circuit switched domain, the indication that the security mode control procedure for the packet switched domain has been processed successfully.

A second embodiment is a system comprising a user equipment and a serving general packet radio service support node, the user equipment having a mobility management layer for circuit switched domain and a general packet radio service mobility management layer for packet switched domain, whereby the mobility management layer for circuit switched domain and the general packet radio service mobility management layer for packet switched domain are configured to be responsible for supervision that integrity protection has been activated in lower layers and are configured to neither receive nor send layer 3 signaling messages unless integrity protection has been activated for the respective domain, whereby the lower layers of each of the circuit switched domain and packet switched domain are configured to provide the mobility management layer or the general packet radio service mobility management layer respectively with an indication when a security mode control procedure for the circuit switched domain or packet switched domain has been processed successfully, whereby upon reception of a first security mode command from universal terrestrial radio access network after radio voice call continuity handover with packet switched and circuit switched radio access bearers to universal terrestrial radio access network, the user equipment activates the security mode control procedure only for the circuit switched domain, and. In this embodiment, the user equipment is configured to provide, if not all core network domain identity information elements in a handover to universal terrestrial radio access network command message indicate the same core network domain and upon successful completion of the security control procedure for the circuit switched domain, to the mobility management layer for the circuit switched domain, the indication that the security mode control procedure for the packet switched domain has been processed successfully.

A third exemplary embodiment is a computer program product comprising a computer-readable storage medium bearing computer program code embodied therein for use with a computer. The computer program code comprises: code for performing the method of the first exemplary embodiment.

A fourth exemplary embodiment is a method. The method is performed by a user equipment having a mobility management layer for circuit switched domain and a general packet radio service mobility management layer for packet switched domain, whereby the mobility management layer for circuit switched domain and the general packet radio service mobility management layer for packet switched domain are responsible for supervision that integrity protection has been activated in lower layers and neither receive nor send layer 3 signaling messages unless integrity protection has been activated for the respective domain, whereby the lower layers of each of the circuit switched domain and packet switched domain provide the mobility management layer or the general packet radio service mobility management layer respectively with an indication when a security mode control procedure for the circuit switched domain or packet switched domain has been processed successfully, whereby upon completion of single radio voice call continuity handover with packet switched and circuit switched radio access bearers to universal terrestrial radio access network, the user equipment adds an indicator to the routing area update message sent to the serving general packet radio service support node to trigger the security mode control procedure for the packet switched domain.

A fifth embodiment is a system comprising a user equipment and a serving general packet radio service support node, the user equipment having a mobility management layer for circuit switched domain and a general packet radio service mobility management layer for packet switched domain, whereby the mobility management layer for circuit switched domain and the general packet radio service mobility management layer for packet switched domain are configured to be responsible for supervision that integrity protection has been activated in lower layers and are configured to neither receive nor send layer 3 signaling messages unless integrity protection has been activated for the respective domain, whereby the lower layers of each of the circuit switched domain and packet switched domain are configured to provide the mobility management layer or the general packet radio service mobility management layer respectively with an indication when a security mode control procedure for the circuit switched domain or packet switched domain has been processed successfully, whereby upon completion of single radio voice call continuity handover with packet switched and circuit switched radio access bearers to universal terrestrial radio access network, the user equipment is configured to add an indicator to the routing area update message sent to the serving general packet radio service support node to trigger the security mode control procedure for the packet switched domain.

A sixth exemplary embodiment is a computer program product comprising a computer-readable storage medium bearing computer program code embodied therein for use with a computer. The computer program code comprises: code for performing the method of the fourth embodiment.

### BRIEF DESCRIPTION OF THE DRAWINGS

In the attached Drawing Figures:
FIG. 1 illustrates a block diagram of an exemplary wireless network in which the exemplary embodiments may be practiced;
FIG. 2 is a block diagram of a portion of the wireless network shown in FIG. 1;
FIG. 3 is a logic flow diagram for integrity protection towards PS CN after handovers involving voice and PS services for a first example, and illustrates the operation of an exemplary method, a result of execution of computer program instructions embodied on a computer readable memory, and/or functions performed by logic implemented in hardware, in accordance with an exemplary embodiment;
FIG. 4 is an illustration of a protocol stack for a PS domain;
FIG. 5 is an illustration of a protocol stack for a CS domain;
FIG. 6 is a logic flow diagram for integrity protection towards PS CN after handovers involving voice and PS services for a second example, and illustrates the operation of an exemplary method, a result of execution of computer program instructions embodied on a computer readable memory, and/or functions performed by logic implemented in hardware, in accordance with an exemplary embodiment.

### DETAILED DESCRIPTION OF THE DRAWINGS

As described above, there are elements that could be improved for inter-RAT handovers. These problems will be described in more detail, once an overview of a system into which the exemplary embodiments may be used is described.

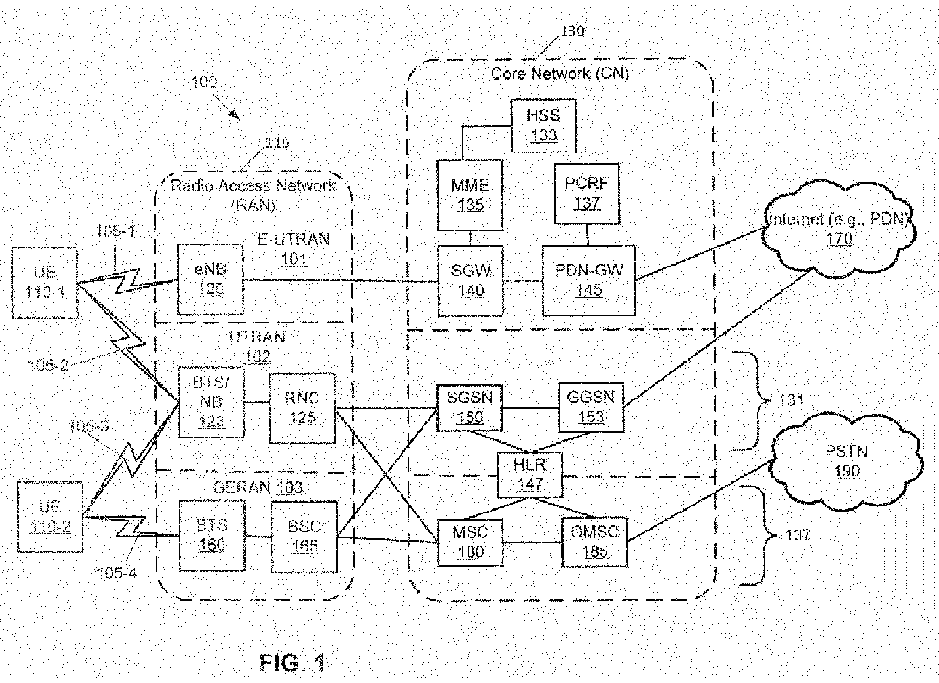

Turning now to FIG. 1, this figure illustrates a block diagram of an exemplary wireless network into which the instant invention may be used. FIG. 1 illustrates three systems, each having different radio access technologies: E-UTRAN 101, UTRAN 102, and GERAN 103. Each of these systems is roughly divided into a radio access network (RAN) 115 and a core network (CN) 130. For ease of explanation, the many connections between various entities in FIG. 1 are not discussed. Furthermore, the systems 101, 102, and 103 are merely representations for ease of exposition and are not to be construed as being limiting or exhaustive.

In an E-UTRAN embodiment, the RAN 115 includes an eNB (evolved Node B, also called E-UTRAN Node B) 120, and the CN 130 includes a home subscriber server (HSS) 133, a serving gateway (SGW) 140, a mobility management entity (MME) 135, a policy and charging rules function (PCRF) 137, and a packet data network gateway (PDN-GW) 145. E-UTRAN is also called long term evolution (LTE).

In a UTRAN embodiment, the RAN 115 includes a base transfer station (BTS) (Node B) 123, and a radio network controller 125, and the CN 130 includes a serving GPRS support node (SGSN) 150, a home location register (HLR) 147), and a gateway GPRS support node (GGSN) 153.

In a GERAN embodiment, the RAN 115 includes a BTS 160 and a base station controller (BSC) 165, and the CN 130 includes a mobile switching center (MSC) 180 and a gateway MSC (GMSC) 185. This example shows the HLR 147 as being part of both UTRAN and GERAN, but this is merely exemplary.

The GMSC 185 is connected to the PSTN 190. There is a circuit-switched core network (CS CN) 137, which includes the MSC 180 and the GMSC 185. Note that the RNC 125 of UTRAN and the BSC 165 of GERAN can both access the CS CN 137.

The PDN-GW 145 and the GGSN 153 connect to the Internet (or other packet data network) 170. There is a packet-switched core network (PS CN) 131, which includes the GGSN 153 and SGSN 150. Both the RNC 125 of UTRAN and the BSC 165 of GERAN can access the PS CN 131.

The example of FIG. 1 shows a UE 110-1 that is able to connect to both the E-UTRAN 101 and the UTRAN 102 via wireless links 105-1 and 105-2, respectively. UE 110-2 can connect to the UTRAN 102 and to the GERAN 103 via wireless links 105-3 and 105-4, respectively. Exemplary embodiments herein may apply to both handovers from E-UTRAN 101 to UTRAN 102 and also from GERAN 103 to UTRAN 102.

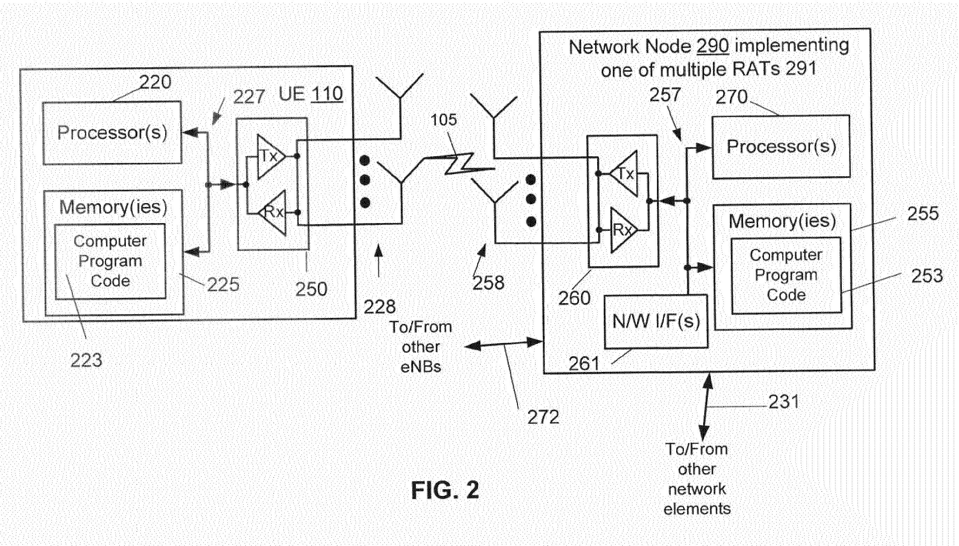

Turning to FIG. 2, this figure shows a block diagram a portion of the wireless system 100. In FIG. 2, a UE 110 is in wireless communication via a wireless link 105 with a network node 290 of wireless network 100. The user equipment 110 includes one or more processors 220, one or more memories 225, and one or more transceivers 250 interconnected through one or more buses 227. The one or more transceivers 250 are connected to one or more antennas 228. The one or more memories 225 include computer program code 223. The one or more memories 225 and the computer program code 223 are configured to, with the one or more processors 220, cause the user equipment 210 to perform one or more of the operations as described herein.

The network node 290 may be one of the RAN network nodes in the RAN 115 for the various systems E-UTRAN 101, UTRAN 102, GERAN 103, and may implement one or more RATs corresponding to an appropriate system 101, 102, or 103. A RAT is a means for a UE to access a wireless network and includes appropriate air interfaces (e.g., spectrums, coding, channels, spreading, physical resources in time, frequency, or codes) for LTE, UMTS, GSM, CDMA, and the like. The network node 290 includes one or more processors 270, one or more memories 255, one or more network interfaces (N/W I/F(s)) 261, and one or more transceivers 260 interconnected through one or more buses 257. The one or more transceivers 260 are connected to one or more antennas 258. The one or more memories 255 include computer program code 253. The one or more memories 255 and the computer program code 253 are configured to, with the one or more processors 250, cause the network node 290 to perform one or more of the operations as described herein. The one or more network interfaces 261 communicate over a network such as the networks 272 and 231. Two or more base stations communicate using, e.g., network 270. The network 272 may be wired or wireless or both. The network 231 may be wired or wireless or both may be used to communicate with other network elements.

The computer readable memories 225 and 255 may be of any type suitable to the local technical environment and may be implemented using any suitable data storage technology, such as semiconductor based memory devices, flash memory, magnetic memory devices and systems, optical memory devices and systems, fixed memory and removable memory. The processors 220 and 270 may be of any type suitable to the local technical environment, and may include one or more of general purpose computers, special purpose computers, microprocessors, digital signal processors (DSPs) and processors based on a multi-core processor architecture, as non-limiting examples.

In general, the various embodiments of the user equipment 110 can include, but are not limited to, cellular telephones such as smart phones, personal digital assistants (PDAs) having wireless communication capabilities, tablets, portable computers having wireless communication capabilities, image capture devices such as digital cameras having wireless communication capabilities, gaming devices having wireless communication capabilities, music storage and playback appliances having wireless communication capabilities, Internet appliances permitting wireless Internet access and browsing, tablets with wireless communication capabilities, as well as portable units or terminals that incorporate combinations of such functions.

Embodiments of the present invention may be implemented in software (executed by one or more processors), hardware (e.g., an application specific integrated circuit), or a combination of software and hardware. In an example embodiment, the software (e.g., application logic, an instruction set) is maintained on any one of various conventional computer-readable media. In the context of this document, a "computer-readable medium" may be any media or means that can contain, store, communicate, propagate or transport the instructions for use by or in connection with an instruction execution system, apparatus, or device, such as a computer, with one example of a computer described and depicted, e.g., in FIG. 2. A computer-readable medium may comprise a computer-readable storage medium (e.g., memories 225 or 255 or other device) that may be any media or means that can contain or store the instructions for use by or in connection with an instruction execution system, apparatus, or device, such as a computer.

As stated above, although there are benefits to these types of inter-RAT handovers, there are also elements that could be improved. As an introductory example, assume the UE 110-1 is handed over from the E-UTRAN 101 to the UTRAN 102. After being handed over from E-UTRAN 101 to UTRAN 102, the UTRAN 102 performs ciphering and integrity protection for the Signaling Radio Bearers (SRBs) towards the latest configured CN domain, which is CS CN 137 in this case. After successful inter RAT handover to UTRAN, the UE may initiate a routing area update (RAU) procedure towards the PS CN 131. Since SRBs can have ciphering and integrity protection towards one CN domain only and the ciphering and integrity protection is performed towards the CS CN 137 in this case, the PS domain (e.g., PS CN 131) is left without any integrity protection in this case. The UE 110-1 then starts to ignore any Routing Area Update Accept messages from the PS CN because the UE 110-1 is not allowed to handle this message unless the PS domain has integrity protection started.

Consider the following more specific example. In case of SRVCC involving both CS and PS services, the routing area update procedure does not work in UTRAN 102 after the E-UTRAN 101 to UTRAN 102 handover of UE 110-1. The RNC 125 performs integrity protection towards the latest configured CN domain according to 3GPP specifications, which is CS CN 137. SGSN 150 does not initiate a new security mode control procedure since the SGSN 150 cannot know in this case that PS domain integrity protection has not been performed by the RNC 150. The UE 110-1 is not allowed to complete the routing area update procedure until the integrity protection is performed towards all CN domains. This leads to a situation where the PS service gets stuck in the UTRAN 102 and causes a bad end user experience because of the unsuccessful routing area update procedure. As a whole, multi-RAB inter RAT handover to UTRAN does not work well. Below is an exemplary scenario:
1. CS CN 137 and PS CN 131 send Relocation Requests for the handover to UTRAN 102 due to SRVCC triggered from E-UTRAN 101.
2. During the handover procedure, the latest CN domain for which ciphering and integrity protection is configured for Signaling RAB is CS CN. This is specified in 3GPP TS 25.331.
3. SRBs can have only one latest CN domain to which ciphering is configured. So this CN domain can be CS or PS and now the domain is CS. This means there is no integrity protection started for the PS CN 131. The integrity protection is not needed since SRB data is integrity protected.
4. The UE 110-1 triggers the Routing Area Update and PS CN 101 sends Routing Area Update Accept.
5. The UE 110-1 does not accept NAS messages from SGSN (i.e., Routing Area Update Accept) due to missing integrity protection towards the PS domain.

That is, there is no integrity protection started for PS domain though SRB data is already integrity protected but towards CS CN. UE notices this due to a supervision mechanism to monitor a start of integrity protection towards each CN domain separately and hence the UE does not accept the Routing Area Accept message from PS CN as per the conditions in 3GPP TS 24.008.

A similar problem exists for UEs with both CS and PS services in GERAN 103 and a DTM handover to UTRAN 102 of the UE 110-2 is performed. The DTM handover is a special handover type in GERAN in which the source base station system requests the target base station system to allocate both circuit-switched (CS) and packet-switched resources. This is useful in scenarios when the UE has, for instance, a conventional (CS) voice call ongoing and a packet session active (e.g., for email sync up or file download) and a handover is required from the GERAN cell that supports DTM operation to a UTRAN cell. The DTM handover is essentially composed of two handover procedures (one in the CS domain and another in the PS domain), which are synchronized and conducted in parallel.

The proposed exemplary embodiments are intended to solve the problem of a failing Routing Area Update procedure in UTRAN 102 after SRVCC from E-UTRAN 101 to UTRAN 102 involving CS voice and PS services and DTM HO from GERAN to UTRAN involving CS voice and PS services.

The following are brief introductions to two exemplary, non-limiting possible examples:
1. Upon reception of first Security Mode Command from UTRAN after SRVCC HO, the UE 110 activates integrity protection for the latest configured CN domain (CS domain in this case) using an integrity key of a key set used towards that CN domain. If the different occurrences of the IE "CN domain indicator" in the IE"RAB information" in the Handover To UTRAN Command included both CS and PS domains, the UE AS layer shall indicate to the upper layer(s) (e.g., MM and GMM) of CS and PS domains that integrity protection for the PS domain is activated.
2. Upon completion of SRVCC HO, the UE adds an indicator in the Routing Area Update Request sent to PS CN150 to trigger a Security Mode Control procedure for the PS domain.

The following presents more detailed descriptions of these two examples.

Regarding example 1, according to current specifications, specifically 3GPP TS 25.331, section 8.3.6.3, the following are performed:
a) Set the variable LATEST_CONFIGURED_CN_DOMAIN to the value indicated in the IE "CN domain identity" of the IE "RAB information" of the IE "RAB information to setup" if all instances of the IE indicate the same CN domain, or to the CS domain when this IE is either not present or different instances indicate different CN domains; and
b) For the CN domain in variable LATEST _CONFIGURED _CN_DOMAIN set the IE "Status" in the variable CIPHERING_STATUS to "Started"; and

Based on (a) and (b) immediately above, the UE initializes the latest CN domain as CS. Further, the same 3GPP section states the following:

If the source RAT 291 is E-UTRAN 101: Upon performing SRVCC (PS to CS) or PS handover, then during the first security mode control procedure following the Inter-RAT handover to UTRAN procedure, the UE activates integrity protection using the integrity key of the key set used (see 3GPP TS 25.331, section 8.1.12.2.2.).

The integrity protection for CS is activated at this point according to current standards. Thus, current 3GPP TS 25.331 does not say anything about the remaining PS signaling connection and the associated RABs.

Regarding 3GPP TS 24.008, section 4.1.1.1.1 states, "the CS and PS domains in the network and the MM and GMM layers in the UE, are not aware of whether integrity protection has been started in the lower layers by the other domain. It is mandatory for the network to initiate one security mode control procedure for the CS domain and one for the PS domain." However, integrity protection is only for SRBs and hence integrity protection is common to both CS and PS by using the keys associated with the latest configured CN domain. Nonetheless, this scenario still does not allow the UE 110 to handle this message unless the PS domain has integrity protection started.

To restate the problem, integrity protection for PS is not activated in the UE and so the GMM layer is not notified that integrity protection occurs for SRBs. Integrity protection is for Signaling RBs towards one CN domain and so integrity protection was activated only for CS. To state the problem yet one more way, in the RRC layer, integrity protection is activated for SRB, e.g., using CS keys and START value. However, in the NAS layer in the UE, the PS side considers integrity protection as not being activated.

To overcome this problem, it is proposed that after inter-RAT Handover and upon reception of Security Mode Command to activate Integrity Protection, if the variable "ESTABLISHED _RABS" contains indications of both CS and PS domains, the UE shall indicate to GMM that integrity protection is activated alongwith indication to MM about activation of integrity protection, without changing the value of variable "LATEST_CONFIGURED_CN_DOMAIN".

To implement this example, 3GPP TS 25.331, section 8.3.6.3 can state the following (as one possibility):

'If all instances of the IE "CN domain identity" in the IE "RAB information" in "RAB Information to Setup" do not indicate same CN domain, then the UE shall indicate to upper layers of CS and PS domain that integrity protection is activated upon reception of first Security Mode Command to activate integrity protection following the inter RAT handover.'

Furthermore, to implement this example, 3GPP TS 24.008, section 4.1.1.1.1 can state the following:
'One indication to the MM layer when a security mode control procedure for the CS domain is processed successfully, one indication to the GMM layer when a security mode control procedure for the PS domain is processed successfully and one indication to the MM and GMM layer when a security mode control procedure that activates integrity protection is processed successfully and this security mode command is the first one after a successful SRVCC handover from E-UTRAN to UTRAN or a successful DTM HO from GERAN to UTRAN.'

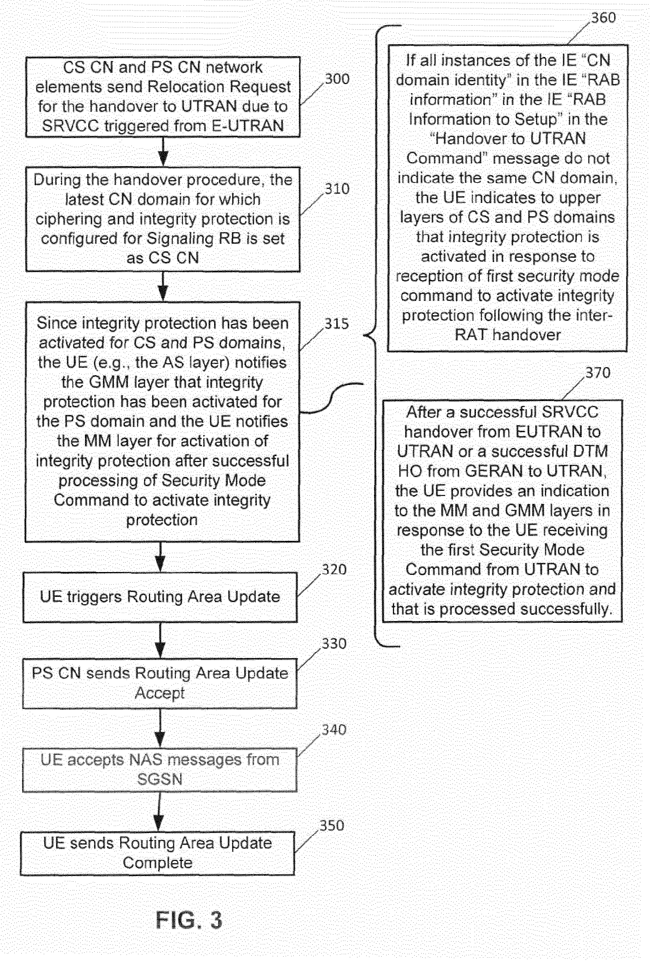

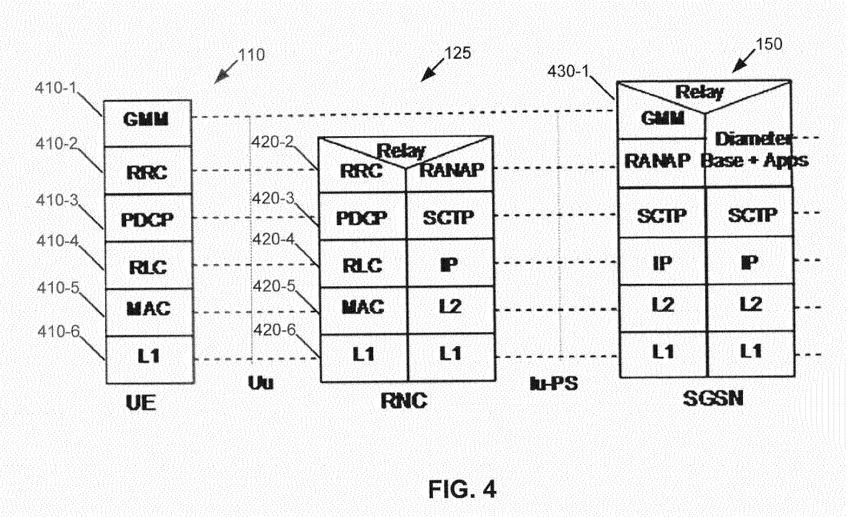

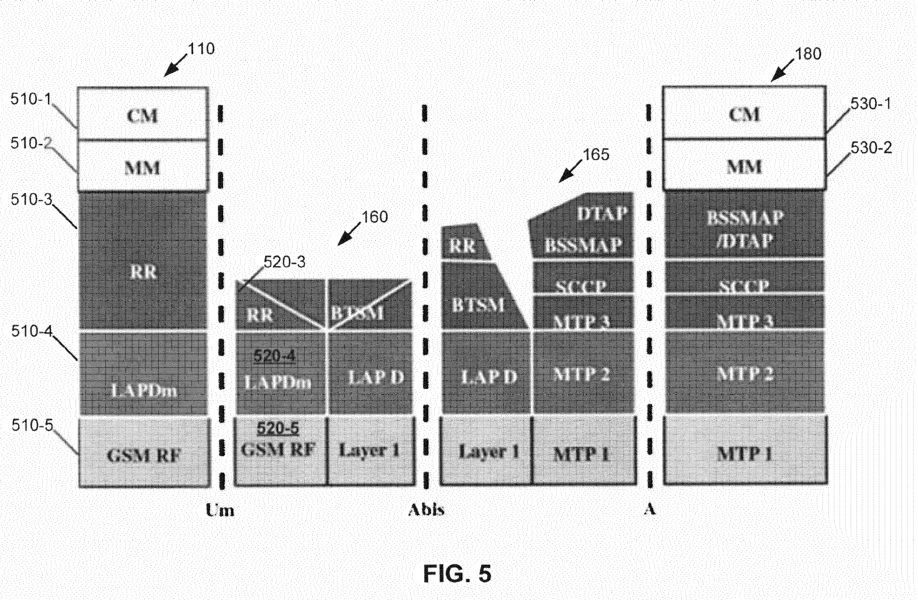

An updated scenario with example 1 is as follows, illustrated by FIG. 3. FIG. 3 is a logic flow diagram for integrity protection towards PS CN after handovers involving voice and PS services for a first example. FIG. 3 also illustrates the operation of an exemplary method, a result of execution of computer program instructions embodied on a computer readable memory, and/or functions performed by logic implemented in hardware, in accordance with an exemplary embodiment.
1. CS CN 137 and PS CN 131, e.g., the MSC 180 and the SGSN 150, respectively, send Relocation Request for the handover to UTRAN due to SRVCC triggered from E-UTRAN. See block 300 of FIG. 3.
2. During the handover procedure, latest CN domain for which ciphering and integrity protection is configured for Signaling RB is CS CN. See block 310 of FIG. 3. This is specified in 3GPP TS 25.331.
3. The SRBs can have only one latest CN domain to which ciphering is configured. So the CN domain can be CS or PS and now the CN domain is CS. RAB information contains CS and PS RABs, thus integrity protection has been activated for CS and PS domains.
   a. The AS layer within the UE notifies the GMM layer that integrity protection has been activated for the PS domain and the UE notifies the MM layer for activation of integrity protection, the notifying occurring after successful processing of a Security Mode Command to activate integrity protection. See block 315 of FIG. 3. See also FIGS. 4 and 5, described below. The notification may be a UE internal implementation.
4. The UE 110 triggers Routing Area Update message (see block 320) and PS CN 131 sends Routing Area Update Accept message (block 330).
5. The UE 110 accepts NAS messages (i.e., Routing Area Update Accept) from SGSN 150 (block 340) and sends Routing Area Update Complete message (see block 350).

One possibility of performing block 315 is to perform block 360, where (in block 360), if all instances of the IE "CN domain identity" in the IE "RAB information" in the IE"RAB Information to Setup" in the "Handover to UTRAN Command" message do not indicate the same CN domain, the UE 110 indicates to upper layers of CS and PS domains (e.g., CS CN 137 and PS CN 131) that integrity protection is activated upon reception of first security mode command to activate integrity protection following the inter-RAT handover. This is described above in reference to 3GPP TS 25.331, section 8.3.6.3.

Another example of block 315 is block 370, where after a successful SRVCC handover from EUTRAN to UTRAN or a successful DTM HO from GERAN to UTRAN, the UE provides an indication to the MM and GMM layers when the UE receives the first Security Mode Command from UTRAN to activate integrity protection and that is processed successfully. This is described above in reference to 3GPP TS 24.008, section 4.1.1.1.1. A Security Mode Control is a procedure which is initiated by the Core Network by sending an RANAP Security Mode Command to the RNC and the RNC then sends RRC Security Mode Command to the UE.

Referring to FIG. 4, this figure is an illustration of a protocol stack for a PS domain, such as for use with the PS CN 131. The UE 110 includes a GMM layer 410-1, an RRC layer 410-2, a PDCP layer 410-3, an RLC layer 410-4, a MAC layer 410-5, and an L1 layer 410-6. The RRC layer 410-2 corresponds to the AS layer that may perform a portion of block 315. The GMM layer 410-1 of the UE 110 communicates with the GMM layer 430-1 of the SGSN 150 and therefore the GMM layer 410-1 is considered to be a layer of the PS domain. The layers 410-2 through 410-6 communicate with corresponding layers 420-2 through 420-6 on the RNC 125. There are additional layers of RANAP (radio access network application part), SCTP (stream control transmission protocol), IP, L2 (the data link layer), and diameter in the RNC 125 and SGSN 150, but these are not relevant to the instant embodiments. The UU and Iu-PS are interfaces.

Turning to FIG. 5, an illustration is shown of a protocol stack for a CS domain, such as for use with the CS CN 137. The UE 110 has a CM layer 510-1, an MM layer 510-2, an RR layer 510-3, LAPDm (link access protocol for the D channel for mobile) layer 510-4, and a GSM RF layer 510-5. The CM 510-1 and MM 510-2 layers communicate with corresponding layers CM 530-1 and MM 530-2 in the MSC 180. The MM layer 510-2 is considered to be a layer of the CS domain. The RR 510-3, LAPDM 510-4, and GSM RF 510-5 layers communicate with corresponding layers RR 520-3, LAPDM 520-4, and GSM RF 520-5 in the BSC 160. The RR layer 510-3 corresponds to the AS layer that may perform a portion of block 315. The layers BTSM (BTS management), DTAP (direct transfer application part), SCCP (signaling connection control port), and MTP (message transfer part) layers are not relevant to the exemplary embodiments. The Um, Abix, and A interfaces are also shown.

Regarding example 2, this entails introducing a new indication (e.g., a new IE) in the Routing Area Update request towards the SGSN 150 to trigger the SGSN 150 to initiate a security mode control procedure. The SMC procedure may contain the same keys CK_PS, IK PS and algorithms that were sent to RNC right after the HO. The CK PS and IK PS are ciphering and integrity, respectively, packet-switched security keys. CN may peform authentication and key agreement procedure to change the keys. In this case, the CN shall indicate the RNC also that new keys will be used by setting "key status" IE in the RANAP Security Mode Command message.

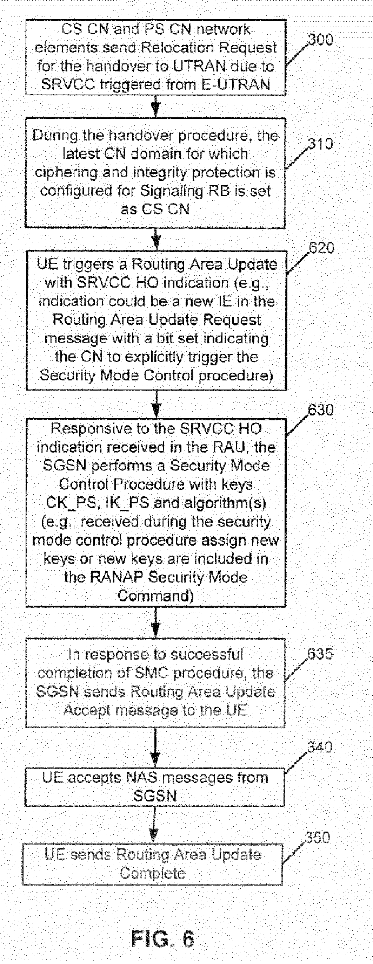

An exemplary updated scenario with example 2 is as follows and is illustrated by FIG. 6. FIG. 6 is a logic flow diagram for integrity protection towards PS CN after handovers involving voice and PS services for a second example. FIG. 6 also illustrates the operation of an exemplary method, a result of execution of computer program instructions embodied on a computer readable memory, and/or functions performed by logic implemented in hardware, in accordance with an exemplary embodiment. Some of the operations in the blocks are the same as blocks in FIG. 3.
1. The CS CN 137 and PS CN 131 send Relocation Requests for the handover to UTRAN due to SRVCC triggered from E-UTRAN. See block 300 of FIG. 6.
2. During the handover procedure, latest CN domain for which ciphering and integrity protection is configured for Signaling RB is CS CN. See block 310 of FIG. 6. This is specified in 3GPP TS 25.331.
3. The SRBs can have only one latest CN domain to which ciphering is configured. So the CN domain can be CS or PS and now the domain is CS.
4. The UE triggers a Routing Area Update message with SRVCC HO indication. See block 620. Note that the Routing Area Update message could also alternatively includes a DTM HO indication for GERAN to UTRAN handovers. This indication could be a new IE in the Routing Area Update Request message with a bit set indicating CN to explicitly trigger Security Mode Control procedure.
5. Responsive to the SRVCC HO indication received in the RAU request, the SGSN performs a Security Mode Control Procedure (see block 630) that may contain the same keys CK_PS, IK_PS and algorithms that were sent to the RNC 125 during the relocation procedure or CN may assign new keys and include them in the RANAP Security Mode Command. As an introduction to the Security Mode Control Procedure, this authentication procedure may be triggered upon RAU where the CN may ask for a UE identity and agreement is made as to the keys to be used by the UE during the new connection being established. The CN informs the RNC about the agreed keys for integrity protection and encryption along with the preferred algorithms for integrity protection and encryption. The RNC selects the algorithm to be used and sends a Security Mode Command to the UE indicating the CN domain to which this procedure belongs and the UE/RNC agree about the activation of encryption and integrity protection in UL and DL for each Signaling RB (also associated data RB, if these exist already). The RNC sends a RANAP SECURITY MODE COMPLETE to CN after receiving successful response from the UE and then the CN sends RAU-Accept/LU-Accept, and the like, depending on the procedure or may continue the RAB Setup procedure. In response to the Security Mode Control Procedure, the upper layers (e.g., the GMM layer) of the UE 110 are therefore informed of the activation of integrity protection of the PS CN.
6. Upon successful completion of SMC procedure, the SGSN 150 sends Routing Area Update Accept message to the UE. See block 635.
7. The UE accepts NAS messages from SGSN (i.e., Routing Area Update Accept) (block 340) and sends Routing Area Update Complete message (block 350) (e.g., since the upper layers, e.g., the GMM layer, of the UE 110 are informed of the activation of integrity protection of the PS CN).

The example 2 can result in additional signaling (due to SMC procedure from SGSN) compared to the example 1, but the example 2 helps with layer separation within the UE. That is, the UE will notify GMM layer about the activation of integrity protection in response to the security mode control procedure being successfully completed for the PS domain and the UE does not have to relate the activation of integrity protection to GMM layer based on the status of MM layer.

It may be possible that UTRAN may need to know if the UE is capable of informing its GMM layer about activation of integrity protection through a UE capability so that the UTRAN could indicate to SGSN about pending integrity protection, if UE is not capable of doing this. For example if there are some newer UEs which can support method 1 while some legacy UEs would not have this capability, a capability indication of the UE may be needed for UTRAN to decide how to handle different UEs after an inter-RAT handover involving CS and PS domains.

If desired, the different functions discussed herein may be performed in a different order and/or concurrently with each other. Furthermore, if desired, one or more of the above-described functions may be optional or may be combined.

Although various aspects of the invention are set out in the independent claims, other aspects of the invention comprise other combinations of features from the described embodiments and/or the dependent claims with the features of the independent claims, and not solely the combinations explicitly set out in the claims.

It is also noted herein that while the above describes example embodiments of the invention, these descriptions should not be viewed in a limiting sense. Rather, there are several variations and modifications which may be made without departing from the scope of the present invention as defined in the appended claims.

The following abbreviations that may be found in the specification and/or the drawing figures are defined as follows:
- 2G: second generation
- 3G: third generation
- 3GPP: third generation partnership project
- AS: access stratum
- BSC: base station controller
- BTS: base transceiver station
- CM: connection management
- CN: core network
- CS: circuit switched
- DL: downlink (from base station to user equipment)
- DTM: dual transfer mode
- EDGE: enhanced data rates for GSM evolution
- eNode B (eNB): evolved Node B (LTE base station)
- E-UTRAN: evolved UTRAN
- GERAN: GSM EDGE radio access network
- GGSN: gateway GPRS support node
- GMM: GPRS mobility management
- GMSC: gateway MSC
- GPRS: general packet radio service
- GSM: global system for mobile communications
- HLR: home location register
- HO: handover
- HSS: home subscriber server
- HTTP: hypertext transfer protocol
- IE: information element
- IMS: IP multimedia subsystem
- IP: Internet protocol
- L1: physical layer, also termed PHY
- LTE: long term evolution
- Node B (NB): Node B (base station in UTRAN)
- MAC: medium access control
- MM: mobility management
- MME: mobility management entity
- MSC: mobile switching center
- NAS: non access stratum
- PCRF: policy control and charging rules function
- PDCP: packet data convergence protocol
- PDN-GW: packet data network-gateway
- PSTN: public switched telephone network
- PS: packet switched
- RB: radio bearer
- RAB: radio access bearer
- RAN: radio access network
- RAT: radio access technology
- RAU: routing area update
- RLC: radio link control
- RNC: radio network controller
- RR: radio resource
- RRC: radio resource control
- SGSN: serving GPRS support node
- SMC: security mode command
- SRB: signaling radio bearer
- SRVCC: single radio voice call continuity
- TS: technical standard
- UE: user equipment
- UL: uplink (from UE to base station)
- UMTS: universal mobile telecommunications system
- UTRAN: universal terrestrial radio access network
- VoIP: voice over IP

## Claims

1. A method performed by a user equipment (110) having a mobility management layer for circuit switched domain (137) and a general packet radio service mobility management layer for packet switched domain (131),
whereby the mobility management layer for circuit switched domain (137) and the general packet radio service mobility management layer for packet switched domain (131) are responsible for supervision that integrity protection has been activated in lower layers and neither receive nor send layer 3 signaling messages unless integrity protection has been activated for the respective domain,
whereby the lower layers of each of the circuit switched domain (137) and packet switched domain (131) provide the mobility management layer or the general packet radio service mobility management layer respectively with an indication when a security mode control procedure for the circuit switched domain (137) or packet switched domain (131) has been processed successfully,
whereby upon reception of a first security mode command from universal terrestrial radio access network (102) after single radio voice call continuity handover with packet switched and circuit switched radio access bearers to universal terrestrial radio access network (102), the user equipment (110) activates the security mode control procedure only for the circuit switched domain (137); and
the user equipment (110) provides, if not all core network domain identity information elements in a handover to universal terrestrial radio access network (102) command message indicate the same core network domain and upon successful completion of the security control procedure for the circuit switched domain (137), to the mobility management layer for the circuit switched domain (137), the indication that the security mode control procedure for the packet switched domain (131) has been processed successfully.

2. The method of claim 1, wherein the single radio voice call continuity handover is a single radio voice call continuity handover from a radio access technology for evolved universal terrestrial radio access network (101) to a radio access technology for universal terrestrial radio access network (102).

3. The method of claim 2, wherein a voice data service is an Internet protocol multimedia subsystem data service in the evolved universal terrestrial radio access network and will be a circuit-switched data service in the universal terrestrial radio access network after the single radio voice call continuity handover.

4. The method of claim 2, wherein a voice data service is a voice over Internet protocol data service in the evolved universal terrestrial radio access network and will be a circuit-switched data service in the universal terrestrial radio access network after the single radio voice call continuity handover.

5. The method of claim 1, wherein the method further comprises, after the providing, accepting at the user equipment non access stratum messages from a network node in the packet switched core network domain.

6. The method of claim 1, wherein providing further comprises an access stratum layer of the user equipment providing the notification to general packet radio service mobility management and mobility management layers within the user equipment.

7. A system comprising a user equipment (110) and a serving general packet radio service support node (150), the user equipment (110) having a mobility management layer for circuit switched domain (137) and a general packet radio service mobility management layer for packet switched domain (131),
whereby the mobility management layer for circuit switched domain (137) and the general packet radio service mobility management layer for packet switched domain (131) are configured to be responsible for supervision that integrity protection has been activated in lower layers and are configured to neither receive nor send layer 3 signaling messages unless integrity protection has been activated for the respective domain,
whereby the lower layers of each of the circuit switched domain (137) and packet switched domain (131) are configured to provide the mobility management layer or the general packet radio service mobility management layer respectively with an indication when a security mode control procedure for the circuit switched domain (137) or packet switched domain (131) has been processed successfully,
whereby upon reception of a first security mode command from universal terrestrial radio access network (102) after radio voice call continuity handover with packet switched and circuit switched radio access bearers to universal terrestrial radio access network (102), the user equipment (110) activates the security mode control procedure only for the circuit switched domain (137), and
the user equipment (110) is configured to provide, if not all core network domain identity information elements in a handover to universal terrestrial radio access network (102) command message indicate the same core network domain and upon successful completion of the security control procedure for the circuit switched domain (137), to the mobility management layer for the circuit switched domain (137), the indication that the security mode control procedure for the packet switched domain (131) has been processed successfully.

8. A computer program product comprising a computer-readable storage medium bearing computer program code embodied therein for use with a computer, the computer program code comprising code for performing the method of claim 1.

9. A method performed by a user equipment (110) having a mobility management layer for circuit switched domain (137) and a general packet radio service mobility management layer for packet switched domain (131)
whereby the mobility management layer for circuit switched domain (137) and the general packet radio service mobility management layer for packet switched domain (131) are responsible for supervision that integrity protection has been activated in lower layers and neither receive nor send layer 3 signaling messages unless integrity protection has been activated for the respective domain,
whereby the lower layers of each of the circuit switched domain (137) and packet switched domain (131) provide the mobility management layer or the general packet radio service mobility management layer respectively with an indication when a security mode control procedure for the circuit switched domain (137) or packet switched domain (131) has been processed successfully,
whereby upon completion of single radio voice call continuity handover with packet switched and circuit switched radio access bearers to universal terrestrial radio access network (102),
the user equipment (110) adds an indicator to the routing area update message sent to the serving general packet radio service support node (150) to trigger the security mode control procedure for the packet switched domain (131).

10. The method of claim 9, wherein the routing area update message comprises an indication of a single radio voice call continuity handover indicating a handover from a radio access technology for evolved universal terrestrial radio access network (101) to a radio access technology for universal terrestrial radio access network (102).

11. A computer program product comprising a computer-readable storage medium bearing computer program code embodied therein for use with a computer, the computer program code comprising code for performing the method of claim 9.

12. A system comprising a user equipment (110) and a serving general packet radio service support node (150), the user equipment (110) having a mobility management layer for circuit switched domain (137) and a general packet radio service mobility management layer for packet switched domain (131),
whereby the mobility management layer for circuit switched domain (137) and the general packet radio service mobility management layer for packet switched domain (131) are configured to be responsible for supervision that integrity protection has been activated in lower layers and are configured to neither receive nor send layer 3 signaling messages unless integrity protection has been activated for the respective domain,
whereby the lower layers of each of the circuit switched domain (137) and packet switched domain (131) are configured to provide the mobility management layer or the general packet radio service mobility management layer respectively with an indication when a security mode control procedure for the circuit switched domain (137) or packet switched domain (131) has been processed successfully,
whereby upon completion of single radio voice call continuity handover with packet switched and circuit switched radio access bearers to universal terrestrial radio access network (102),
the user equipment (110) is configured to add an indicator to the routing area update message sent to the serving general packet radio service support node (150) to trigger the security mode control procedure for the packet switched domain (131).

## Patentansprüche

1. Verfahren, das von einem Benutzer-Equipment, UE, (110) durchgeführt wird, das eine Mobilitätsmanagementschicht für eine leitungsvermittelte Domäne (137) und eine Mobilitätsmanagementschicht des allgemeinen Paketfunkdienstes für die paketvermittelte Domäne (131) aufweist,
wobei die Mobilitätsmanagementschicht für die leitungsvermittelte Domäne (137) und die Mobilitätsmanagementschicht des allgemeinen Paketfunkdienstes für die paketvermittelte Domäne (131) dafür zuständig sind zu überwachen, dass der Integritätsschutz in den unteren Schichten aktiviert wurde, und Schicht-3-Signalisierungsnachrichten weder empfangen noch gesendet werden, solange nicht der Integritätsschutz für die jeweilige Domäne aktiviert wurde,
wobei die unteren Schichten sowohl der leitungsvermittelten Domäne (137) als auch der paketvermittelten Domäne (131) der Mobilitätsmanagementschicht bzw. der Mobilitätsmanagementschicht des allgemeinen Paketfunkdienstes eine Anzeige bereitstellen, wenn eine Sicherheitsmodus-Kontrollprozedur für die leitungsvermittelte Domäne (137) oder die paketvermittelte Domäne (131) erfolgreich verarbeitet wurde,
wobei bei Empfang eines ersten Sicherheitsmodus-Befehls vom universellen terrestrischen Funkzugangsnetz (102) nach einer "Single Radio Voice Call Continuity"-Übergabe (unterbrechungsfreien Sprachverbindungsübergabe über eine einzige Funkschnittstelle) mit paketvermittelten und leitungsvermittelten Funkzugangsträgern an das universelle terrestrische Funkzugangsnetz (102) das UE (110) eine Sicherheitsmodus-Kontrollprozedur nur für die leitungsvermittelte Domäne (137) aktiviert; und
das Benutzer-Equipment (110), wenn nicht alle Identitätsinformationselemente der Kernnetzdomäne in einer Übergabe-an-universelle terrestrische Funkzugangsnetz (102)-Befehlsnachricht dieselbe Kernnetzdomäne angeben, und nach erfolgreichem Abschluss der Sicherheitskontrollprozedur für die leitungsvermittelte Domäne (137) der Mobilitätsmanagementschicht für die leitungsvermittelte Domäne (137) die Anzeige bereitstellt, dass die Sicherheitsmodus-Kontrollprozedur für die paketvermittelte Domäne (131) erfolgreich verarbeitet wurde.

2. Verfahren nach Anspruch 1, wobei die "Single Radio Voice Call Continuity"-Übergabe eine "Single Radio Voice Call Continuity"-Übergabe von einer Funkzugangstechnologie für ein entwickeltes universelles terrestrisches Funkzugangsnetz (101) an eine Funkzugangstechnologie für ein universelles terrestrisches Funkzugangsnetz (102) ist.

3. Verfahren nach Anspruch 2, wobei ein Sprachdatendienst ein Multimedia-Subsystem-Datendienst des Internet-Protokolls in dem entwickelten universellen terrestrischen Funkzugangsnetz ist und nach der "Single Radio Voice Call Continuity"-Übergabe ein leitungsvermittelter Datendienst im universellen terrestrischen Funkzugangsnetz sein wird.

4. Verfahren nach Anspruch 2, wobei ein Sprachdatendienst ein Datendienst des Voice-over-Internet-Protokolls im entwickelten universellen terrestrischen Funkzugangsnetz ist und nach der "Single Radio Voice Call Continuity"-Übergabe ein leitungsvermittelter Datendienst im universellen terrestrischen Funkzugangsnetz sein wird.

5. Verfahren nach Anspruch 1, wobei das Verfahren ferner, nach dem Bereitstellen, umfasst, Nichtzugangsschicht-Nachrichten von einem Netzknoten in der paketvermittelten Kernnetzdomäne am Benutzer-Equipment anzunehmen.

6. Verfahren nach Anspruch 1, wobei das Bereitstellen ferner eine Zugangsschicht des Benutzer-Equipment umfasst, die die Benachrichtigung an die Mobilitätsmanagementschicht des allgemeinen Paketfunkdienstes und die Mobilitätsmanagementschicht innerhalb des Benutzer-Equipment bereitstellt.

7. System, das ein Benutzer-Equipment (110) und einem bedienenden Unterstützungsknoten des allgemeinen Paketfunkdienstes (150) umfasst, wobei das Benutzer-Equipment (110) eine Mobilitätsmanagementschicht für eine leitungsvermittelte Domäne (137) und eine Mobilitätsmanagementschicht des allgemeinen Paketfunkdienstes für eine paketvermittelte Domäne (131) aufweist,
wobei die Mobilitätsmanagementschicht für die leitungsvermittelte Domäne (137) und die Mobilitätsmanagementschicht des allgemeinen Paketfunkdienstes für die paketvermittelte Domäne (131) dafür ausgelegt sind, dafür zuständig zu sein zu überwachen, dass der Integritätsschutz in den unteren Schichten aktiviert wurde, und dafür ausgelegt sind, Schicht-3-Signalisierungsnachrichten weder zu empfangen noch zu senden, solange nicht der Integritätsschutz für die jeweilige Domäne aktiviert wurde,
wobei die unteren Schichten sowohl der leitungsvermittelten Domäne (137) als auch der paketvermittelten Domäne (131) dafür ausgelegt sind, der Mobilitätsmanagementschicht bzw. der Mobilitätsmanagementschicht des allgemeinen Paketfunkdienstes eine Anzeige bereitzustellen, wenn eine Sicherheitsmodus-Kontrollprozedur für die leitungsvermittelte Domäne (137) oder die paketvermittelte Domäne (131) erfolgreich verarbeitet wurde,
wobei bei Empfang eines ersten Sicherheitsmodus-Befehls vom universellen terrestrischen Funkzugangsnetz (102) nach einer "Single Radio Voice Call Continuity"-Übergabe (unterbrechungsfreien Sprachverbindungsübergabe über eine einzige Funkschnittstelle) mit paketvermittelten und leitungsvermittelten Funkzugangsträgern an das universelle terrestrische Funkzugangsnetz (102) das UE (110) eine Sicherheitsmodus-Kontrollprozedur nur für die leitungsvermittelte Domäne (137) aktiviert, und
das Benutzer-Equipment (110), wenn nicht alle Identitätsinformationselemente der Kernnetzdomäne in einer Übergabe-an-universelle terrestrische Funkzugangsnetz (102)-Befehlsnachricht dieselbe Kernnetzdomäne angeben, und nach erfolgreichem Abschluss der Sicherheitskontrollprozedur für die leitungsvermittelte Domäne (137) dazu ausgelegt ist, der Mobilitätsmanagementschicht für die leitungsvermittelte Domäne (137) die Anzeige bereitzustellen, dass die Sicherheitsmodus-Kontrollprozedur für die paketvermittelte Domäne (131) erfolgreich verarbeitet wurde.

8. Computerprogrammprodukt, ein computerlesbares Speichermedium umfassend, das darin ausgeführten Computerprogrammcode trägt, zur Verwendung mit einem Computer, wobei der Computerprogrammcode Code zum Durchführen des Verfahrens nach Anspruch 1 umfasst.

9. Verfahren, das von einem Benutzer-Equipment, UE, (110) durchgeführt wird, das eine Mobilitätsmanagementschicht für eine leitungsvermittelte Domäne (137) und eine Mobilitätsmanagementschicht des allgemeinen Paketfunkdienstes für die paketvermittelte Domäne (131) aufweist,
wobei die Mobilitätsmanagementschicht für die leitungsvermittelte Domäne (137) und die Mobilitätsmanagementschicht des allgemeinen Paketfunkdienstes für die paketvermittelte Domäne (131) dafür zuständig sind zu überwachen, dass der Integritätsschutz in den unteren Schichten aktiviert wurde, und Schicht-3-Signalisierungsnachrichten weder empfangen noch gesendet werden, solange nicht der Integritätsschutz für die jeweilige Domäne aktiviert wurde,
wobei die unteren Schichten sowohl der leitungsvermittelten Domäne (137) als auch der paketvermittelten Domäne (131) der Mobilitätsmanagementschicht bzw. der Mobilitätsmanagementschicht des allgemeinen Paketfunkdienstes eine Anzeige bereitstellen, wenn eine Sicherheitsmodus-Kontrollprozedur für die leitungsvermittelte Domäne (137) oder die paketvermittelte Domäne (131) erfolgreich verarbeitet wurde,
wobei, nach Abschluss der "Single Radio Voice Call Continuity"-Übergabe mit paketvermittelten und leitungsvermittelten Funkzugangsträgern an das universelle terrestrische Funkzugangsnetz (102),
das Benutzer-Equipment (110) der Routingbereich-Aktualisierungsnachricht, die an den bedienenden Unterstützungsknoten des allgemeinen Paketfunkdienstes (150) gesendet wird, eine Anzeige hinzufügt, um die Sicherheitsmodus-Kontrollprozedur für die paketvermittelte Domäne (131) auszulösen.

10. Verfahren nach Anspruch 9, wobei die Routingbereich-Aktualisierungsnachricht eine Anzeige einer "Single Radio Voice Call Continuity"-Übergabe umfasst, die eine Übergabe von einer Funkzugangstechnologie für ein entwickeltes universelles terrestrisches Funkzugangsnetz (101) an eine Funkzugangstechnologie für ein universelles terrestrisches Funkzugangsnetz (102) anzeigt.

11. Computerprogrammprodukt, ein computerlesbares Speichermedium umfassend, das darin ausgeführten Computerprogrammcode trägt, zur Verwendung mit einem Computer, wobei der Computerprogrammcode Code zum Durchführen des Verfahrens nach Anspruch 9 umfasst.

12. System, das ein Benutzer-Equipment (110) und einem bedienenden Unterstützungsknoten des allgemeinen Paketfunkdienstes (150) umfasst, wobei das Benutzer-Equipment (110) eine Mobilitätsmanagementschicht für eine leitungsvermittelte Domäne (137) und eine Mobilitätsmanagementschicht des allgemeinen Paketfunkdienstes für eine paketvermittelte Domäne (131) aufweist,
wobei die Mobilitätsmanagementschicht für die leitungsvermittelte Domäne (137) und die Mobilitätsmanagementschicht des allgemeinen Paketfunkdienstes für die paketvermittelte Domäne (131) dafür ausgelegt sind, dafür zuständig zu sein zu überwachen, dass der Integritätsschutz in den unteren Schichten aktiviert wurde, und dafür ausgelegt sind, Schicht-3-Signalisierungsnachrichten weder zu empfangen noch zu senden, solange nicht der Integritätsschutz für die jeweilige Domäne aktiviert wurde,
wobei die unteren Schichten sowohl der leitungsvermittelten Domäne (137) als auch der paketvermittelten Domäne (131) dafür ausgelegt sind, der Mobilitätsmanagementschicht bzw. der Mobilitätsmanagementschicht des allgemeinen Paketfunkdienstes eine Anzeige bereitzustellen, wenn eine Sicherheitsmodus-Kontrollprozedur für die leitungsvermittelte Domäne (137) oder die paketvermittelte Domäne (131) erfolgreich verarbeitet wurde,
wobei, nach Abschluss der "Single Radio Voice Call Continuity"-Übergabe mit paketvermittelten und leitungsvermittelten Funkzugangsträgern an das universelle terrestrische Funkzugangsnetz (102),
das Benutzer-Equipment (110) dafür ausgelegt ist, der Routingbereich-Aktualisierungsnachricht, die an den bedienenden Unterstützungsknoten des allgemeinen Paketfunkdienstes (150) gesendet wird, eine Anzeige hinzuzufügen, um die Sicherheitsmodus-Kontrollprozedur für die paketvermittelte Domäne (131) auszulösen.

## Revendications

1. Procédé exécuté par un équipement utilisateur (110) ayant une couche de gestion de mobilité pour le domaine de commutation de circuits (137) et une couche de gestion de mobilité du service général de radiocommunication en mode paquet pour le domaine de commutation de paquets (131),
moyennant quoi la couche de gestion de mobilité pour le domaine de commutation de circuits (137) et la couche de gestion de mobilité du service général de radiocommunication en mode paquet pour le domaine de commutation de paquets (131) sont responsables de la supervision du fait qu'une protection d'intégrité a été activée dans des couches inférieures et ne reçoivent ni envoient de messages de signalisation de couche 3 à moins qu'une protection d'intégrité ait été activée pour le domaine respectif,
moyennant quoi les couches inférieures de chacun du domaine de commutation de circuits (137) et du domaine de commutation de paquets (131) fournissent une indication à la couche de gestion de mobilité ou, respectivement, à la couche de gestion de mobilité du service général de radiocommunication en mode paquet, lorsqu'une procédure de commande de mode de sécurité pour le domaine de commutation de circuits (137) ou le domaine de commutation de paquets (131) a été traitée avec succès,
moyennant quoi lors de la réception d'une première commande de mode de sécurité en provenance d'un réseau universel d'accès radio terrestre (102) après un transfert intercellulaire de continuité d'appel vocal radio unique avec des porteuses d'accès radio à commutation de paquets et commutation de circuits vers un réseau universel d'accès radio terrestre (102), l'équipement utilisateur (110) active la procédure de commande de mode de sécurité uniquement pour le domaine de commutation de circuits (137), et
l'équipement utilisateur (110) fournit, si les éléments d'information d'identité du domaine de réseau central contenus dans un message de commande de transfert intercellulaire vers un réseau universel d'accès radio terrestre (102) n'indiquent pas tous le même domaine de réseau central et lors du succès de la procédure de commande de sécurité pour le domaine de commutation de circuits (137), à la couche de gestion de mobilité pour le domaine de commutation de circuits (137), l'indication du fait que la procédure de commande du mode de sécurité pour le domaine de commutation de paquets (131) a été traitée avec succès.

2. Procédé selon la revendication 1, dans lequel le transfert intercellulaire de continuité d'appel vocal radio unique est un transfert intercellulaire de continuité d'appel vocal radio unique d'une technologie d'accès radio pour un réseau universel d'accès radio terrestre évolué (101) vers une technologie d'accès radio pour un réseau universel d'accès radio terrestre (102).

3. Procédé selon la revendication 2, dans lequel un service de données vocales est un service de données de sous-système multimédia au protocole Internet dans le réseau universel d'accès radio terrestre évolué et sera un service de données à commutation de circuits dans le réseau universel d'accès radio terrestre après le transfert intercellulaire de continuité d'appel vocal radio unique.

4. Procédé selon la revendication 2, dans lequel un service de données vocales est un service de données de type voix sur le protocole Internet dans le réseau universel d'accès radio terrestre évolué et sera un service de données à commutation de circuits dans le réseau universel d'accès radio terrestre après le transfert intercellulaire de continuité d'appel vocal radio unique.

5. Procédé selon la revendication 1, dans lequel le procédé comprend en outre, après la fourniture, l'acceptation, au niveau de l'équipement utilisateur, de messages de strate de non-accès provenant d'un nœud de réseau dans le domaine du réseau central à commutation de paquets.

6. Procédé selon la revendication 1, dans lequel la fourniture comprend en outre le fait qu'une couche de strate d'accès de l'équipement utilisateur fournisse la notification aux couches de gestion de mobilité du service général de radiocommunication en mode paquet et de gestion de mobilité dans l'équipement utilisateur.

7. Système comprenant un équipement utilisateur (110) et un nœud de support du service général de radiocommunication en mode paquet (150), l'équipement utilisateur (110) ayant une couche de gestion de mobilité pour le domaine de commutation de circuits (137) et une couche de gestion de mobilité du service général de radiocommunication en mode paquet pour le domaine de commutation de paquets (131),
moyennant quoi la couche de gestion de mobilité pour le domaine de commutation de circuits (137) et la couche de gestion de mobilité du service général de radiocommunication en mode paquet pour le domaine de commutation de paquets (131) sont configurées pour être responsables de la supervision du fait qu'une protection d'intégrité a été activée dans des couches inférieures et sont configurées pour ne recevoir ni envoyer de messages de signalisation de couche 3 à moins qu'une protection d'intégrité ait été activée pour le domaine respectif,
moyennant quoi les couches inférieures de chacun du domaine de commutation de circuits (137) et du domaine de commutation de paquets (131) sont configurées pour fournir une indication à la couche de gestion de mobilité ou, respectivement, à la couche de gestion de mobilité du service général de radiocommunication en mode paquet, lorsqu'une procédure de commande de mode de sécurité pour le domaine de commutation de circuits (137) ou le domaine de commutation de paquets (131) a été traitée avec succès,
moyennant quoi lors de la réception d'une première commande de mode de sécurité en provenance d'un réseau universel d'accès radio terrestre (102) après un transfert intercellulaire de continuité d'appel vocal radio avec des porteuses d'accès radio à commutation de paquets et commutation de circuits vers un réseau universel d'accès radio terrestre (102), l'équipement utilisateur (110) active la procédure de commande de mode de sécurité uniquement pour le domaine de commutation de circuits (137), et
l'équipement utilisateur (110) est configuré pour fournir, si les éléments d'information d'identité du domaine de réseau central contenus dans un message de commande de transfert intercellulaire vers un réseau universel d'accès radio terrestre (102) n'indiquent pas tous le même domaine de réseau central et lors du succès de la procédure de commande de sécurité pour le domaine de commutation de circuits (137), à la couche de gestion de mobilité pour le domaine de commutation de circuits (137), l'indication du fait que la procédure de commande du mode de sécurité pour le domaine de commutation de paquets (131) a été traitée avec succès.

8. Produit de programme informatique comprenant un support de stockage lisible par ordinateur sur lequel est mis en œuvre un code de programme informatique destiné à être utilisé avec un ordinateur, le code de programme informatique comprenant un code permettant l'exécution du procédé selon la revendication 1.

9. Procédé exécuté par un équipement utilisateur (110) ayant une couche de gestion de mobilité pour le domaine de commutation de circuits (137) et une couche de gestion de mobilité du service général de radiocommunication en mode paquet pour le domaine de commutation de paquets (131),
moyennant quoi la couche de gestion de mobilité pour le domaine de commutation de circuits (137) et la couche de gestion de mobilité du service général de radiocommunication en mode paquet pour le domaine de commutation de paquets (131) sont responsables de la supervision du fait qu'une protection d'intégrité a été activée dans des couches inférieures et ne reçoivent ni envoient de messages de signalisation de couche 3 à moins qu'une protection d'intégrité ait été activée pour le domaine respectif,
moyennant quoi les couches inférieures de chacun du domaine de commutation de circuits (137) et du domaine de commutation de paquets (131) fournissent une indication à la couche de gestion de mobilité ou, respectivement, à la couche de gestion de mobilité du service général de radiocommunication en mode paquet, lorsqu'une procédure de commande de mode de sécurité pour le domaine de commutation de circuits (137) ou le domaine de commutation de paquets (131) a été traitée avec succès,
moyennant quoi lors de l'achèvement d'un transfert intercellulaire de continuité d'appel vocal radio unique avec des porteuses d'accès radio à commutation de paquets et commutation de circuits vers un réseau universel d'accès radio terrestre (102),
l'équipement utilisateur (110) ajoute un indicateur au message de mise à jour de zone de routage envoyé au nœud de support du service général de radiocommunication en mode paquet (150) pour déclencher la procédure de commande de mode de sécurité pour le domaine de commutation de paquets (131).

10. Procédé selon la revendication 9, dans lequel le message de mise à jour de zone de routage comprend une indication d'un transfert intercellulaire de continuité d'appel vocal radio unique indiquant un transfert intercellulaire d'une technologie d'accès radio pour un réseau universel d'accès radio terrestre évolué (101) vers une technologie d'accès radio pour un réseau universel d'accès radio terrestre (102).

11. Produit de programme informatique comprenant un support de stockage lisible par ordinateur sur lequel est mis en œuvre un code de programme informatique destiné à être utilisé avec un ordinateur, le code de programme informatique comprenant un code permettant l'exécution du procédé selon la revendication 9.

12. Système comprenant un équipement utilisateur (110) et un nœud de support du service général de radiocommunication en mode paquet (150), l'équipement utilisateur (110) ayant une couche de gestion de mobilité pour le domaine de commutation de circuits (137) et une couche de gestion de mobilité du service général de radiocommunication en mode paquet pour le domaine de commutation de paquets (131),
moyennant quoi la couche de gestion de mobilité pour le domaine de commutation de circuits (137) et la couche de gestion de mobilité du service général de radiocommunication en mode paquet pour le domaine de commutation de paquets (131) sont configurées pour être responsables de la supervision du fait qu'une protection d'intégrité a été activée dans des couches inférieures et sont configurées pour ne recevoir ni envoyer de messages de signalisation de couche 3 à moins qu'une protection d'intégrité ait été activée pour le domaine respectif,
moyennant quoi les couches inférieures de chacun du domaine de commutation de circuits (137) et du domaine de commutation de paquets (131) sont configurées pour fournir une indication à la couche de gestion de mobilité ou, respectivement, à la couche de gestion de mobilité du service général de radiocommunication en mode paquet, lorsqu'une procédure de commande de mode de sécurité pour le domaine de commutation de circuits (137) ou le domaine de commutation de paquets (131) a été traitée avec succès,
moyennant quoi lors de l'achèvement d'un transfert intercellulaire de continuité d'appel vocal radio unique avec des porteuses d'accès radio à commutation de paquets et commutation de circuits vers un réseau universel d'accès radio terrestre (102),
l'équipement utilisateur (110) est configuré pour ajouter un indicateur au message de mise à jour de zone de routage envoyé au nœud de support du service général de radiocommunication en mode paquet (150) pour déclencher la procédure de commande de mode de sécurité pour le domaine de commutation de paquets (131).
